(19) Europäisches Patentamt
European Patent Office
Office européen des brevets

(11) EP 2 656 104 B1

## (12) FASCICULE DE BREVET EUROPEEN

(45) Date de publication et mention
de la délivrance du brevet:
**29.07.2015 Bulletin 2015/31**

(21) Numéro de dépôt: **11802398.5**

(22) Date de dépôt: **20.12.2011**

(51) Int Cl.:
*G01S 13/90* *(2006.01)*    *G01S 13/94* *(2006.01)*
*G01S 13/88* *(2006.01)*

(86) Numéro de dépôt international:
**PCT/EP2011/073422**

(87) Numéro de publication internationale:
**WO 2012/084958 (28.06.2012 Gazette 2012/26)**

### (54) PROCEDE ET DISPOSITIF DE SUIVI DE VARIATION DE TERRAIN

VERFAHREN UND VORRICHTUNG ZUR ÜBERWACHUNG VON VERÄNDERUNGEN IN EINEM GELÄNDE

METHOD AND DEVICE FOR MONITORING VARIATIONS IN TERRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2010 FR 1005015**

(43) Date de publication de la demande:
**30.10.2013 Bulletin 2013/44**

(73) Titulaire: **THALES**
**92200 Neuilly-sur-Seine (FR)**

(72) Inventeurs:
• **GERMOND, Cécile**
**F-92704 Colombes Cedex (FR)**

• **SIRVEN, François**
**F-92704 Colombes Cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 736 957**    **US-A- 5 867 119**
**US-A1- 2005 273 257**

EP 2 656 104 B1

**Description**

L'invention se situe dans le domaine de la navigation d'aéronefs, avec ou sans pilote.

Elle concerne autant la navigation d'avions, d'hélicoptères ou encore de tout porteur y compris des drones civils, et s'applique en particulier aux phases de vol en suivi de terrain. La hauteur de l'aéronef au-dessus du sol peut être assez faible.

Dans ce domaine, l'un des objectifs est de pouvoir anticiper les évolutions du terrain avec précision afin d'adapter la navigation de l'aéronef. L'objectif du suivi de terrain est de maintenir une certaine hauteur entre l'aéronef et le sol survolé.

Un des problèmes majeurs concerne l'adaptation de la navigation en présence d'éléments de sursol fixes tels les immeubles, pylônes, hangars, falaises, etc..... Il faut pouvoir les détecter, les localiser et les caractériser avec précision. Suivant le type d'élément de sursol (ponctuel ou étendu), l'adaptation de la navigation peut être différente.

Dans les cas extrêmes de vol à basse hauteur, il s'agit alors de détecter les routes de collision avec les éléments de sursol, et de déclencher une procédure d'alerte et de changement de direction de l'aéronef pour éviter la collision.

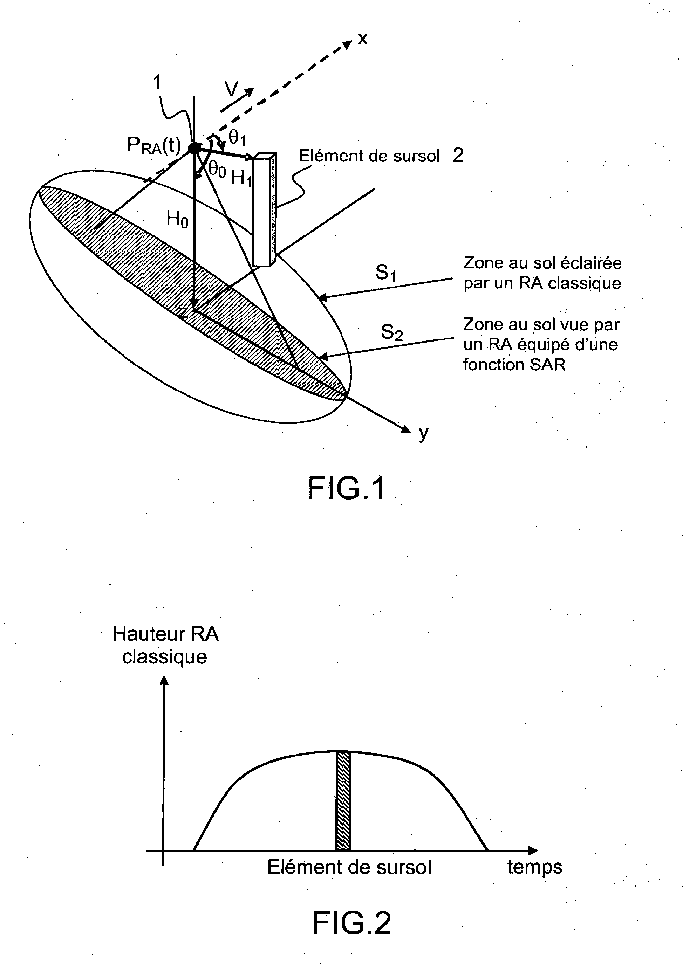

Ce problème est notamment critique pour le fonctionnement des radio-altimètres (RA). La figure 1 illustre le cas d'un radio altimètre 1 de position $P_{RA}(t)$ perturbé par la présence d'un élément de sursol 2: la distance $H_1$ entre le radio altimètre et l'élément de sursol étant inférieure à la distance $H_0$ entre le RA et le sol à l'instant t, le radio altimètre classique donne comme hauteur à l'instant t la valeur $H_1$ au lieu de $H_0$. D'une part, le RA ne dispose pas de la hauteur verticale précise à l'instant t, et d'autre part, il n'est pas capable de prédire la position exacte de l'élément de sursol frontal ni de le caractériser, notamment d'estimer sa hauteur et de savoir s'il s'agit d'un élément ponctuel ou étendu. La figure 2 donne schématiquement la hauteur H fournie par le RA en fonction du temps en présence d'élément de sursol 2.

Une première approche de l'état de l'art consiste à équiper l'aéronef d'une fonction connue des radars à ouverture synthétique plus connus sous l'abréviation anglo-saxonne « SAR» qui permet d'extraire la vraie hauteur $H_0$ à l'instant t par réduction de la tâche $S_1$ éclairée au sol (figure 1 correspondant à la zone $S_2$ au sol vue par un capteur équipé d'une fonction SAR). Cependant, cette technique ne permet pas d'anticiper l'évolution de terrain, de détecter les routes de collision ou de caractériser les éléments de sursol.

Ce problème d'anticipation de l'évolution de terrain est également critique pour permettre le développement des vols de drones dans l'espace aérien civil.

Le problème technique général concerne donc l'anticipation de l'évolution du relief de terrain et la caractérisation du sol et, d'un élément de sursol et/ou du sursol. Dans les cas extrêmes, le problème consiste à éviter les collisions frontales.

L'état de l'art connu du demandeur pour les systèmes d'anticollision pour aéronefs comprend :

- des systèmes coopératifs d'alertes tels le TCAS abréviation anglo-saxonne de «Trafic Alert and Collision Avoidance System» par exemple, surtout dédiés à la détection d'obstacles mobiles,
- des radars dédiés de pointe avant (radar éclairant un cône situé devant l'avion dans l'axe de déplacement du porteur), souvent à ondes millimétriques,
- des systèmes multi capteurs (radar et caméras visible ou infra rouge) avec fusion de données.

Le brevet FR2913775 décrit un système de détection d'obstacle pour aéronef au roulage, avec au moins deux radars.

Le brevet US 6885334 concerne un radio-altimètre fonctionnant suivant un principe SAR auquel est ajoutée une fonction d'anticollision avec un radar complémentaire de pointe avant à 35GHz. Ce brevet US 6885334 décrit un procédé mettant en oeuvre un système d'aide à la navigation PTAN (Precision Terrain Aided Navigation) complété d'un radar de pointe avant. Le PTAN consiste à implémenter un traitement Doppler sur un radio altimètre permettant de réduire, dans l'axe de déplacement du porteur, la tâche vue au sol (figure 1). L'extraction de la fréquence Doppler nulle permet de fournir une meilleure estimation de la hauteur sous l'aéronef et de ne pas être perturbé par les éléments de sursol frontaux. Sur la figure 1 par exemple, la distance $H_1$ entre le radio altimètre et l'élément de sursol est inférieure à la distance $H_0$ entre le radio altimètre et le sol à l'instant t. Le radio altimètre classique donne comme hauteur à l'instant t la valeur $H_1$, tandis que le RA équipé d'une fonction SAR donnera la hauteur $H_0$. Le brevet US 6885334 recourt à l'utilisation d'un radar de pointe avant dédié pour assurer la fonction d'anticollision.

Le brevet US 5 836 957 divulgue un procédé permettant de suivre la variation de la surface R du sol et/ou la présence d'éléments de sursol. Le brevet US 5 736 957 divulgue un procédé permettant de suivre la variation de la surface R du sol.

Les inconvénients de l'art antérieur des systèmes anticollision sont notamment les suivants :

- les systèmes coopératifs par définition s'appuient sur des informations externes pour fonctionner, fournies par exemple par des stations au sol, ou par d'autres aéronefs;
- l'utilisation de radars de pointe avant nécessite l'implémentation d'un radar dédié à la fonction d'anticollision, ce qui est coûteux. D'autre part les performances angulaires sont généralement faibles;

- l'utilisation de systèmes optiques est limitée par les conditions climatiques. De plus, le champ de vision est faible;
- la mise en oeuvre de systèmes multi-capteurs avec fusion de données est complexe et coûteuse.

En conclusion, les systèmes et procédés décrits dans l'art antérieur ne permettent pas de disposer d'un système d'anticipation du suivi de terrain et d'anticollision pour aéronef en vol ayant l'ensemble des propriétés suivantes :

- autonomie (ne reposant pas sur une technique coopérative),
- utilisation d'un seul capteur/chaîne radio fréquence,
- mode de fonctionnement faiblement complexe,
- fonctionnement à haute résolution en distance et à haute résolution suivant l'axe de déplacement du porteur,
- fonctionnement bas coût.

Définitions

Dans la suite de la description les notations suivantes seront utilisées

H: hauteur sous aéronef,
Hj : hauteur de l'élément de sursol j,
dj, distance de l'élément de sursol j à l'aéronef,
$\theta j$: angle de visée, déterminé par rapport à l'axe x, pour l'objet j,
Axe x : Axe horizontal dans la direction de déplacement de l'aéronef, au début de l'observation.
Axe y: Axe horizontal perpendiculaire à la direction de déplacement de l'aéronef, au début de l'observation.
Axe z : Axe vertical, dirigé vers le bas.

Les axes x, y, z forment un trièdre direct. La notion de distance est relative à la distance entre l'aéronef et le relief et/ou entre l'aéronef et l'élément de sursol.
Le mot aéronef est utilisé pour désigner tout porteur, mobile en déplacement. Le mot « chirp » est défini comme un signal modulé en fréquence autour d'une fréquence porteuse.
Le mot deramping est connu de l'Homme du métier comme une technique mettant en oeuvre une démodulation du signal reçu par une réplique de l'onde émise elle-même retardée.
L'analyse spectrale désigne de façon générale l'analyse des composantes fréquentielles d'un signal.
Les traitements non focalisés effectuent des traitements adaptés à des fréquences Doppler constantes sur la durée d'observation. Ces traitements font l'hypothèse que les variations de Doppler des signaux réfléchis par les éléments de sursol sont faibles sur la durée d'observation.
Les traitements focalisés prennent en compte les variations, sur la durée d'analyse, des fréquences Doppler des signaux réfléchis.
L'objet de la présente invention concerne un procédé permettant de suivre la variation de la surface R du sol et/ou la présence d'éléments de sursol, ledit procédé étant mis en oeuvre sur un porteur se déplaçant à la vitesse V= (Vx, Vy, Vz), ledit porteur comprenant au moins une antenne d'émission/réception, un moyen de traitement des signaux, ledit procédé comprenant au moins les étapes suivantes :

a) déterminer une forme d'onde h(t), constituée d'une suite de pulses ou train d'ondes,
b) définir une plage de distance à surveiller,
c) émettre ladite onde h(t) de type « chirp », rampes FMCW, ou signal pseudo aléatoire; de largeur de bande B, enregistrer les signaux réfléchis par le sol et reçus par le porteur,
d) exécuter un traitement cohérent au sein de l'élément du train d'onde afin d'obtenir la résolution distance fixée initialement, le procédé effectue la mesure de la distance dj par un procédé de filtrage adapté en distance ou de deramping au sein de chaque pulse/rampe réfléchi, et
e) pour un ensemble de N signaux réfléchis à N instants différents, pour une plage de distance et pour chaque angle de visée $\{\theta_c^i\}$ effectuer un traitement de l'ensemble des signaux reçus en utilisant la formule traduisant la fréquence Doppler des signaux réfléchis :

$$f_D(t) \approx \frac{2\left(v_x \cos\theta_c^i + v_z \sin\theta_c^i\right)}{\lambda} - \frac{2\left(v_x \sin\theta_c^i - v_z \cos\theta_c^i\right)^2}{\lambda D_0}t \quad (1)$$

où $D_0$ appartient à la plage de distance traitée,

$\lambda$ est la longueur d'onde de l'onde émise,

i est un indice pour un angle de visée,

$\{\theta_c^i\}$ est une valeur donnée d'un angle de visée appartenant à l'ensemble des angles explorés par le faisceau, le procédé est caractérisé en ce que :

f) on applique un critère de détection énergétique Ej en utilisant une valeur seuil choisie Es, de façon à déterminer des couples de valeurs (dj, θj) correspondant à la présence d'éléments de sursol ou de variation de niveau du sol,

g) on détermine la valeur de la hauteur H sous le porteur,

h) on estime les valeurs des hauteurs Hj des éléments de sursol en utilisant la hauteur sous aéronef H, les valeurs (dj, θj), par exemple au moyen d'un calcul trigonométrique,

i) connaissant ces valeurs (dj, θj, Hj) on détermine les caractéristiques des éléments de sursol, leur position pj et les variations Δr du niveau du sol ou sursol.

Les signaux réfléchis et reçus par ledit porteur sont, par exemple, enregistrés après l'étape de traitement distance sur quelques pulses ou train d'onde ou au cours de l'étape c).

Selon une variante de mise en oeuvre l'aéronef se déplace horizontalement avec une vitesse uniforme et l'analyse spectrale des signaux reçus au cours du temps sur les N pulses est effectuée pour la fréquence Doppler $f_s^i$

$$f_s^i \approx f_0^i = \frac{2V}{\lambda}\cos\theta_C^i$$

Dans le cas d'une vitesse verticale non nulle de déplacement de l'aéronef, la fréquence Doppler d'intérêt est la fréquence Doppler $f_s^i$

$$f_s^i \approx \frac{2\left(v_x\cos\theta_C^i + v_z\sin\theta_C^i\right)}{\lambda}$$

Pour un porteur ayant un mouvement quelconque, l'évolution de la fréquence Doppler dépend alors des variations de vitesse du porteur, et l'étape d'analyse spectrale est remplacée par la mise en oeuvre d'un filtre adapté tel que :

$$h(t) = s^*(-t)$$

où

$$s(t) = e^{-4j\frac{\pi}{\lambda}D(t)}, t \in [0, T_e]$$

avec D(t) la distance relief/aéronef au cours du temps et $T_e$ durée d'analyse.

Selon une variante de mise en oeuvre on détermine la hauteur H sous le porteur en utilisant la fréquence Doppler nulle.

Le procédé peut comporter une étape permettant de déterminer l'étendue ou la longueur L d'un élément de sursol selon l'axe de déplacement de l'aéronef comprenant au moins les étapes suivantes :

Conserver pour chaque valeur d'angle de visée, la valeur minimale de distance dj pour laquelle la valeur d'énergie Ej est au-dessus du seuil de détection Es, à partir des valeurs d'angles de visée voisines, déterminer la position pj du début d'un élément de sursol, puis la position pj+L de la fin dudit élément de sursol et déduire une longueur approximative de l'élément de sursol en mettant en oeuvre les étapes suivantes :

- dans le cas où l'échantillonnage des angles de visée est fin, c'est à dire inférieur ou égal à la résolution angulaire, construction d'un profil de distance fonction de l'angle, puis, par calcul géométrique, construction d'un profil de hauteur fonction de l'angle, et

- dans le cas où l'échantillonnage des angles de visée est large, c'est à dire supérieur à la résolution angulaire, on procède à la détection d'éléments de sursol pour des angles de visée voisins de $\theta_c^i$, puis on estime la longueur de l'objet.

Selon une variante de mise en oeuvre le procédé est utilisé pour le suivi au cours du temps de l'évolution de la distance aéronef/objet, et le déclenchement d'une alerte lorsque la distance devient inférieure à un seuil ds, ledit procédé comportant au moins les étapes suivantes :

- émission d'une forme d'onde de type chirp, FMCW ou pseudo-aléatoire.
- enregistrement des signaux réfléchis par les objets et reçus par le porteur,
  pour un ensemble de N signaux réfléchis à N instants différents,
  pour chaque angle de visée $\theta_c^i$ et pour une plage de distance aéronef/relief ou aéronef/élément de sursol,

  - utiliser un filtrage adapté en distance dans chaque impulsion, afin d'optimiser le rapport signal/bruit,
  - effectuer un filtrage adapté Doppler d'impulsion à impulsion en mettant en oeuvre les étapes suivantes :

    o calcul de la composante spectrale $f_s^i$ des signaux réfléchis,
    o dans le cas de l'extension au porteur en mouvement non MRU, filtrage adapté,

- détecter en utilisant une méthode de type énergétique, la présence éventuelle d'un élément de sursol sous l'angle de visée $\theta_c^i$ et à une distance $d^i$,
- enregistrer la distance $d^i$ (t) correspondant à la distance minimale dmin pour laquelle il y a détection pour chaque valeur de $\theta_c^i$,
- si $\theta_c^i$ correspond à l'angle de visée à la verticale, alors calculer la hauteur H0 sous le porteur correspondant à la distance minimale pour laquelle il y a détection pour $\theta_c^i=\pi/2$.
- sinon,

  o si $\theta_c^i$ correspond à l'angle minimal défini par l'ouverture de l'antenne :

    - pour t> $T_0$, comparaison de $d^i$ (t) à {$d^i$ ($t_{ant}$)}, $t_{an}$<t,
    - si $d^i$ (t) < {$d^i$ (tant)}, $t_{ant}$<t et $d^i$ (t) < seuil, déclenchement d'une alerte,

  o le déclenchement de l'alerte peut aussi dépendre de la caractérisation des objets, de la manière suivante
  o caractérisation de l'extension de l'objet :

    - pour des angles de visées $\theta_c^{vi}$ voisins de $\theta_c^i$, effectuée la comparaison des distances $d^{vi}$ et l'estimation de l'extension de l'objet suivant l'axe de déplacement du porteur.

L'invention concerne aussi un porteur ou un dispositif monté sur un porteur se déplaçant à une vitesse V permettant de mettre en oeuvre le procédé de détection et de suivi de variation de relief du sol et/ou de détection d'obstacles, caractérisé en ce qu'il comporte au moins une antenne d'émission/réception, un moyen de traitement des signaux, un module de connaissance de la vitesse.

D'autres caractéristiques et avantages de la présente invention apparaîtront mieux à la lecture de la description qui suit d'exemples donnés à titre illustratif et nullement limitatifs annexés des figures qui représentent:

- La figure 1, l'illustration du principe d'un radio altimètre fonctionnant suivant un principe SAR,
- La Figure 2, la hauteur schématique fournie par un RA classique en présence d'éléments de sursol,
- La Figure 3A, l'illustration du problème de suivi de terrain en présence d'éléments de sursol, figure 3B la grille distance, Doppler, figure 3C schéma d'un dispositif mettant en oeuvre le procédé selon l'invention,
- La Figure 4, la surveillance d'un ensemble d'angles de visée {$\theta_c^i$} vers l'avant,
- La Figure 5, les courbes de performance en résolution suivant l'axe de déplacement du porteur pour le traitement Doppler dit « non focalisé »,
- La Figure 6, l'illustration de la capacité de caractérisation de type d'éléments de sursol - cas d'un élément de sursol ponctuel,
- La Figure 7, l'illustration de la capacité de caractérisation de type d'élément de sursol - cas d'un élément de sursol étendu,
- La Figure 8, l'utilisation d'une antenne dépointée vers l'avant,
- La Figure 9, l'illustration du problème de suivi de terrain et d'anticollision sur un aéronef, et

- La Figure 10, l'anticipation du suivi de terrain / détection des routes de collision.

Les exemples qui vont être donnés pour illustrer le procédé et le système selon l'invention concernent un aéronef 10 ou porteur équipé d'au moins une antenne d'émission/réception 12 éclairant une portion du sol située vers l'avant du porteur, d'un module d'émission 13 d'une onde h(t), par exemple une chaîne radio fréquence, d'un processeur 14 adapté à exécuter les étapes du procédé selon l'invention et d'une mémoire 15 permettant de mémoriser les signaux reçus et les informations de distance, angle et hauteur résultats de la mise en oeuvre du procédé. L'antenne 12 émet un faisceau d'ouverture physique donnée qui va permettre une surveillance de terrain et d'éléments de sursol en avant de l'aéronef en mouvement.

L'aéronef peut aussi être équipé d'un moyen d'affichage des résultats, tels que la position des éléments de sursol, leur hauteur ou encore la variation de niveau ou du relief R de terrain survolé. Ce moyen d'affichage 16 est relié au processeur. Dans certains cas, le processeur 14 transmettra ces résultats vers un module 17 générant une alarme sonore ou visuelle, par exemple dans le cas de l'application anti-collision. L'aéronef comprend généralement un module 18 permettant de connaître sa vitesse V de déplacement transmettant cette information au processeur 14. Ce module peut être une centrale inertielle équipant généralement les avions, un système de positionnement par satellite connu sous l'abréviation anglo-saxonne GNSS (Global Navigation Satellite System) comme le système GPS (global positioning system), GLONASS ou Galileo....

L'aéronef peut être équipé d'un radar ou d'un radioaltimètre ayant notamment pour fonction de mesurer sa hauteur par rapport au sol.

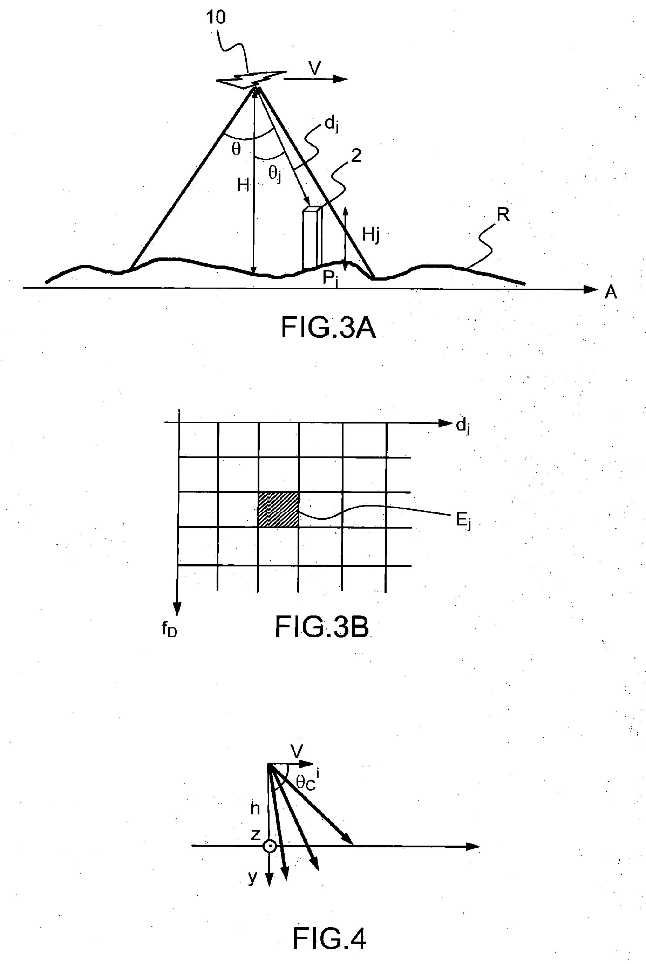

La figure 3A illustre le problème de suivi de terrain en présence d'éléments de sursol 2 par un aéronef 10 qui se déplace à une vitesse V quelconque. Le relief du terrain est représenté par la référence R et l'élément de sursol par la référence 2. Le vecteur vitesse V est décomposé en Vx, Vy, Vz dans l'exemple selon les axes x, y, et z représentés sur la figure 1. Du fait de la définition des axes, Vy est nul en début d'observation et constamment nul dans le cas d'une vitesse constante. La figure 4 illustre aussi un exemple d'ensemble de directions de visée $\{\theta_c^i\}$ permettant la surveillance en avant de la variation du relief R du sol et de la présence d'éléments de sursol.

La solution proposée se base sur la mise en oeuvre sur l'aéronef 10 en vol d'une fonction d'anticipation de suivi de terrain fonctionnant suivant un principe radar SAR et surveillant un ensemble de directions de visée situées vers l'avant du porteur. Cette fonction est implémentée dans le processeur de l'aéronef.

Le capteur utilisé est, par exemple, un radar dont l'antenne 12 illumine une portion S du sol située en avant de l'aéronef 10 en mouvement.

Le radar fonctionne suivant un principe SAR, il émet un signal, enregistre les signaux reçus (en amplitude/phase) au cours du temps et les traite de façon cohérente (en utilisant l'information de phase) selon un principe détaillé ci-après.

La solution consiste notamment à analyser les fréquences Doppler $\mathbf{f_D}$ des signaux réfléchis sous plusieurs angles de visée $\{0_c^i\}$. Les valeurs mesurées comprennent l'angle $\pi/2$ (en radians), correspondant à la verticale. La valeur minimale de l'angle $\theta_c^i$ est limitée par l'ouverture physique de l'antenne. L'espacement entre les angles mesurés $\theta_c^i$ est prise inférieure ou égale à la résolution angulaire (ce qui peut conduire à des mesures non régulièrement espacées en angle). La surveillance de cet ensemble d'angles de visée va permettre d'anticiper la connaissance du terrain.

Le procédé mis en oeuvre par l'invention comprend notamment les étapes suivantes :

a) déterminer une forme d'onde h(t), constituée d'une suite de pulses ou train d'ondes,

b) définir une plage de distance à surveiller, la distance correspondant à la distance aéronef/relief et/ou aéronef/élément de sursol

c) émettre ladite onde h(t) de type « chirp », rampes FMCW, ou signal pseudo aléatoire, de largeur de bande B, et enregistrer les signaux réfléchis et reçus par le porteur. Les signaux peuvent aussi être enregistrés après traitement distance sur quelques pulses ou train d'onde (étape 4).

d) exécuter un traitement cohérent au sein de l'élément du train d'onde afin d'obtenir la résolution distance fixée initialement, le procédé effectue la mesure de la distance dj par exemple par un procédé de filtrage adapté en distance ou de "deramping" au sein de chaque pulse/rampe réfléchi.

e) pour un ensemble de N signaux réfléchis à N instants différents, pour une plage de distance et pour chaque angle de visée $\{\theta_c^i\}$ effectuer un traitement de l'ensemble des signaux reçus en utilisant la formule traduisant la fréquence Doppler (approximation au premier ordre en t) des signaux réfléchis :

$$f_D(t) \approx \frac{2\left(v_x \cos\theta_c^i + v_z \sin\theta_c^i\right)}{\lambda} - \frac{2\left(v_x \sin\theta_c^i - v_z \cos\theta_c^i\right)^2}{\lambda D_0}t \quad (1)$$

où $D_0$ appartient à la plage de distance traitée. On peut effectuer les calculs pour un ensemble de valeurs $D_0$

appartenant à la plage de distance traitée,

$\lambda$ est la longueur d'onde de l'onde émise,

i est un indice pour un angle de visée,

{$0_c^i$} est une valeur donnée d'un angle de visée appartenant à l'ensemble des angles explorés par le faisceau,

L'ordre dans lequel les étapes d) et e) (traitement distance et traitement Doppler) sont effectuées peut être inversé. Ces traitements peuvent être effectués conjointement.

Note : Pour un traitement optimal de tous les éléments de sursol, il faut aussi prendre en compte la position des éléments selon l'axe y. La formule précédente correspond à des éléments de sursol positionnés à y=0.

f) appliquer un critère de détection énergétique Ej en utilisant une valeur seuil choisie Es, de façon à déterminer des couples de valeurs (dj, $\theta$j) correspondant à la présence d'éléments de sursol ou de variation de niveau du sol. Une détection de type énergétique est mise en oeuvre pour détecter la présence d'élément de sursol sous l'angle de visée $\theta_c^i$ et pour une certaine plage de distance aéronef/relief ou aéronef/élément de sursol.

g) déterminer la valeur de la hauteur H sous le porteur,

h) estimer les valeurs des hauteurs Hj des éléments de sursol 2j en utilisant la hauteur sous aéronef H, les valeurs (dj, $\theta$j), par exemple au moyen d'un calcul trigonométrique,

i) connaissant ces valeurs (dj, $\theta$j, Hj) déterminer les caractéristiques des éléments de sursol (2j), leur position pj et les variations $\Delta$r du niveau du sol ou sursol.

Dans le cas d'une vitesse verticale Vz de porteur nulle, le traitement non focalisé des signaux de fréquence Doppler nulle permet d'extraire la hauteur verticale H du porteur.

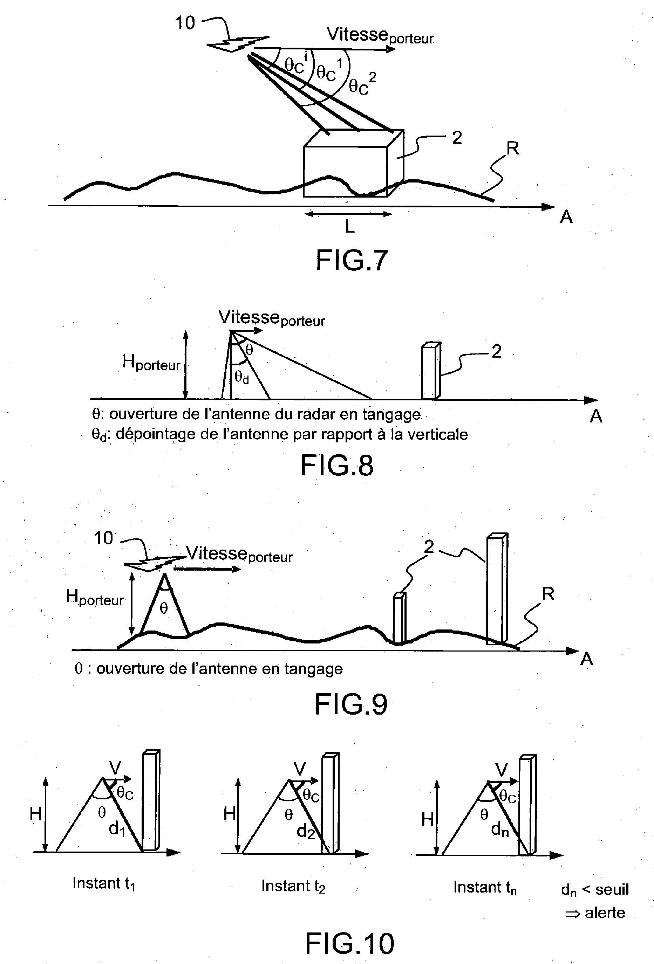

**Détermination de la longueur de l'élément de sursol ou étendue de l'élément de sursol - figure 7**

Selon une variante de réalisation, le procédé peut comporter une étape k) dans laquelle on estime l'étendue L ou la longueur de l'élément de sursol L suivant l'axe de déplacement du porteur, pour déterminer le type d'élément de sursol, i.e. ponctuel ou étendu tel qu'il est représenté sur la figure 7.

Pour cela, il est possible d'interpréter les mesures d'énergie relevées pour différentes valeurs de distance dj et des valeurs d'angles, et de conserver, pour chaque valeur d'angle la valeur minimale de dj pour laquelle la valeur d'énergie Ej est au-dessus du seuil de détection, puis, à partir des valeurs d'angles de visée correspondantes, de déterminer la position pj du début de l'élément de sursol, puis la position pj+L de la fin et d'en déduire une longueur approximative de l'élément de sursol.

Dans le cas où l'échantillonnage des angles de visée est fin, le procédé va construire un profil de distance fonction de l'angle, puis, par calcul géométrique, un profil de hauteur fonction de l'angle.

Dans le cas où l'échantillonnage des angles de visée est large, on procède à la détection d'éléments de sursol pour des angles de visée voisins de $\theta_c^i$, puis on estime la longueur de l'objet.

La forme d'onde utilisée par le radar consiste, par exemple, en un train de pulses de type chirp ou de rampes d'onde continue où sa fréquence de transmission varie linéairement en fonction du temps plus connue sous l'abréviation anglo-saxonne « FMCW » signifiant Frequency Modulation Continuous Wave. La distance objet/porteur est obtenue, par exemple, par un calcul classique de Deramping (terme défini précédemment) ou de filtrage adapté connu de l'Homme du métier.

Cas d'un porteur en mouvement rectiligne uniforme, ou MRU, présentant une vitesse verticale non nulle

Dans le cas d'une vitesse verticale non nulle, V=(Vx, 0, Vz). Le procédé calcule les fréquences Doppler adéquates, qui sont fonction du produit scalaire de la vitesse V de l'aéronef et de la direction de l'objet, à extraire pour obtenir les hauteurs souhaitées, c'est-à-dire la hauteur H sous l'aéronef en fonction d'une vitesse verticale donnée.

Dans le cas d'un porteur ayant une vitesse verticale non nulle, la fréquence Doppler est estimée (approximation au premier ordre en t) par

$$f_D(t) \approx \frac{2(v_x \cos \theta_C + v_z \sin \theta_C)}{\lambda} - \frac{2(v_x \sin \theta_C - v_z \cos \theta_C)^2}{\lambda D_0} t$$

Pour un traitement non focalisé, la fréquence Doppler $f_s^i$ d'intérêt devient :

$$f_s^{\;i} \approx \frac{2\left(v_x \cos\theta_C^{\;i} + v_z \sin\theta_C^{\;i}\right)}{\lambda}$$

Cas d'un porteur en mouvement rectiligne uniforme, ou MRU, présentant une vitesse verticale nulle

Dans ce cas, V=(V$_x$, 0, 0). Pour un traitement non focalisé, le deuxième terme de l'équation (1) est négligé. Le procédé effectue une analyse spectrale des signaux reçus au cours du temps (sur les N pulses reçus) pour la fréquence Doppler f$_s^{\;i}$

$$f_s^{\;i} \approx f_0^{\;i} = \frac{2V}{\lambda}\cos\theta_C^{\;i}$$

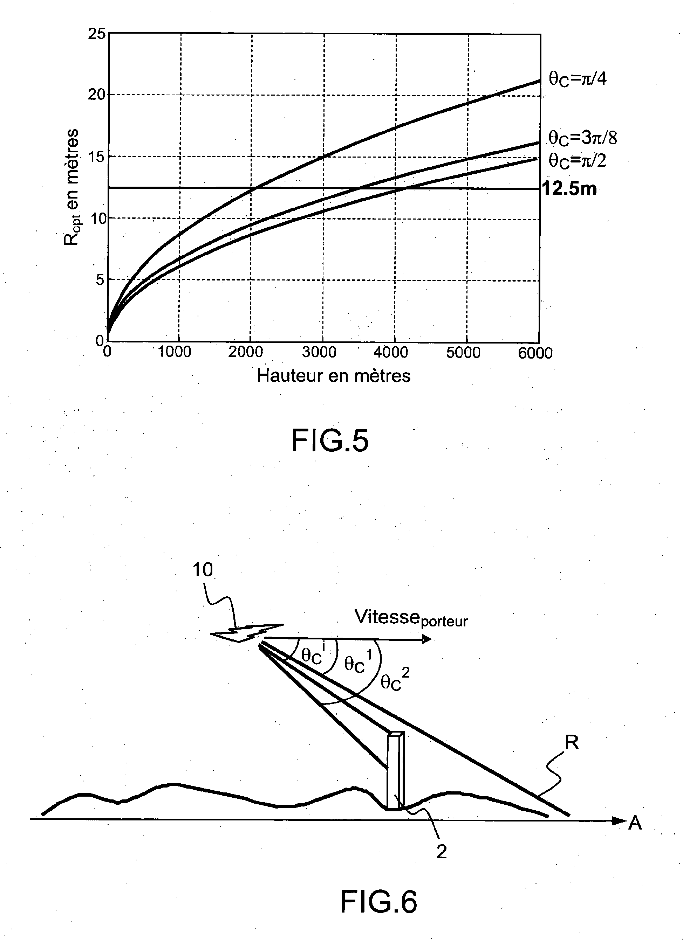

Cet exemple correspond au traitement SAR dit « non focalisé » connu de l'Homme du métier. La résolution obtenue peut être suffisante, il n'est pas nécessaire de prendre en compte la variation de la fréquence Doppler f$_D$ au cours de la durée d'analyse. La figure 5 donne des exemples de courbes de performance de la résolution obtenue en fonction de la hauteur du porteur et de l'angle de visée.

Cas d'un porteur en mouvement non rectiligne uniforme

Il peut s'agir par exemple d'un mouvement uniformément accéléré ou d'un mouvement quelconque. Dans tous les cas, on suppose connues les évolutions de vitesse et d'accélération.

Dans le cas d'un porteur ayant un mouvement quelconque, l'évolution de la fréquence Doppler f$_D$ dépend alors de des variations de vitesse du porteur, qu'il faut prendre en compte pour avoir un traitement ayant une bonne résolution angulaire. L'étape d'analyse spectrale, analyse des composantes fréquentielles du signal, est remplacée par la mise en oeuvre d'un filtre adapté tel que :

$$h(t) = s^{*}(-t)$$

forme d'onde conjuguée inverse dans le temps (prise en compte de l'évolution fréquence Doppler) où

$$s(t) = e^{-4j\frac{\pi}{\lambda}D(t)}, t \in \left[0, T_e\right]$$

avec D(t) la distance objet/aéronef au cours du temps et T$_e$ durée d'analyse.
Remarque : il s'agit ici de la mise en oeuvre du traitement SAR dit « focalisé ».

Selon un mode de réalisation, il peut être intéressant de dépointer l'antenne vers l'avant, selon le schéma décrit à la figure 8, afin d'augmenter la durée disponible pour l'anticipation del'évolution de terrain. Pour cela, l'idée consiste à émettre un faisceau d'antenne d'ouverture θ avec un angle de dépointage θd de l'antenne compté par rapport à la verticale considérée par rapport au sol.

Les figures 9 et 10 schématisent un mode de réalisation permettant le suivi au cours du temps de l'évolution de la distance aéronef/objet, et le déclenchement d'une alerte lorsque la distance devient inférieure à un seuil ce qui peut correspondre à la présence d'un ou plusieurs éléments de sursol. Le seuil ds dépend de l'application.

Le procédé comporte au moins les étapes suivantes:

-    L'émission d'une forme d'onde de type chirp, FMCW ou pseudo-aléatoire,
-    L'enregistrement des signaux réfléchis par les objets et reçus par le porteur,

Pour un ensemble de N signaux réfléchis à N instants différents,
[0057]    Pour chaque angle de visée θ$_C^{\;i}$ et pour une plage de distance aéronef/relief ou aéronef/élément de sursol,

-    Le filtrage adapté en distance dans chaque impulsion, afin d'optimiser le rapport signal/bruit selon une méthode connue de l'Homme du métier,

- Le filtrage adapté Doppler d'impulsion à impulsion

  o Calcul de la composante spectrale $f_s^i$ des signaux réfléchis,
  o Dans le cas de l'extension au porteur en mouvement non MRU, effectuer un filtrage adapté

- La détection de type énergétique, qui indique la présence éventuelle d'un objet sous l'angle de visée $\theta_c^i$ et à une distance $d^i$,
- L'enregistrement de la distance $d^i$ (t) correspondant à la distance minimale pour laquelle il y a détection pour chaque valeur de $\theta_c^i$,
- Si $\theta_c^i$ correspond à l'angle de visée à la verticale, alors calcul de la hauteur H0 sous le porteur correspondant à la distance minimale pour laquelle il y a détection pour $\theta_c^i = \pi/2$,
- Sinon,

  o Si $\theta_c^i$ correspond à l'angle minimal défini par l'ouverture de l'antenne

    - Pour t> $T_0$, comparaison de $d^i$ (t) à {$d^i$ ($t_{ant}$)}, $t_{ant}$<t,
    - Si $d^i$ (t) < {$d^i$ ($t_{ant}$)}, $t_{ant}$<t et $d^i$ (t) < seuil, déclenchement d'une alerte,

      • Le déclenchement de l'alerte peut aussi dépendre de la caractérisation des objets, voir ci-dessous,

  o Caractérisation de l'extension de l'objet

    - Pour des angles de visées $\theta_c^{vi}$ voisins de $\theta_c^i$, comparaison des distances $d^{vi}$ et estimation de l'extension de l'objet suivant l'axe de déplacement du porteur.

L'analyse de l'évolution des distances aéronef/ objets pour chaque angle de visée surveillé permet alors de détecter des routes de collision. Lorsque la distance entre l'aéronef et le sol ou un élément de sursol passe en dessous d'un certain seuil ds, une alerte est déclenchée et une commande de changement de direction est transmise au pilote ou au système de commande de l'aéronef.

Le déclenchement de l'alerte peut également dépendre de la caractéristique des éléments de sursol (ponctuel/étendu). Par un traitement complémentaire par exemple celui décrit pour déterminer la longueur ou l'étendue d'un objet, le procédé fournit de plus une caractérisation des éléments de sursol. L'aéronef est alors en mesure de savoir si l'objet frontal est ponctuel ; de type arbre, pylône, immeuble, ou étendu; de type hangar, falaise. Le porteur pourra alors adapter sa stratégie de vol en fonction de la caractéristique du sol et du sursol.

Cette solution peut notamment être intégrée à un radio altimètre afin d'enrichir son fonctionnement.

**Exemple chiffré**

L'exemple chiffré qui suit est celui d'un hélicoptère dans le cas extrême d'anticollision à basse hauteur. Par exemple, on considère un hélicoptère en phase de pénétration volant à une hauteur de 100m, une vitesse de 10m/s, et une antenne d'ouverture physique de 90° (cône de demi angle au sommet de 45°) orientée à la verticale vers le bas, et pour un angle surveillé égal à 45° vers l'avant de l'appareil.

Une durée d'intégration de 0.27s donne une résolution de 2.7m suivant l'axe de déplacement du porteur, tandis qu'une durée d'intégration de 0.03s donne une résolution d'environ 13m, ce qui reste intéressant car cette valeur de résolution est compatible des dimensions d'une cellule de carte numérique de terrain.
La durée entre l'instant de la première détection et l'instant de collision est de 10s ce qui laisse le temps de détecter la route de collision et de déclencher une procédure d'alerte et de changement de direction de l'aéronef.

La solution fournit un système autonome d'anticipation et de suivi de terrain, c'est-à-dire sans besoin de coopération externe.

Un seul capteur est nécessaire pour mette en oeuvre la fonction d'anticipation, il est d'ailleurs possible d'utiliser l'antenne et la chaîne radio fréquence d'un radio altimètre déjà installé sur l'aéronef pour mettre en oeuvre le procédé. Les fonctions d'anticipation de terrain et d'alertes d'anticollision sont obtenues grâce à la surveillance d'un ensemble d'angle de visée vers l'avant, avec un seul capteur.

Le procédé repose sur des traitements faiblement complexes et donc bas coût.

Le procédé présente l'avantage de fournir une capacité de caractérisation du sol et du sursol, notamment en donnant une estimation du type d'éléments de sursol (ponctuel de type arbre/pylône ou étendu).
Enfin le procédé peut être intégré à un radio altimètre fonctionnant suivant un principe SAR, fournissant ainsi une fonction complémentaire d'anticipation de terrain au radio altimètre.

La solution est bas coût car :

- les traitements mis en oeuvre sont faiblement complexes. Pour des résolutions acceptables, de simples analyses spectrales par calcul de transformée de Fourier sont suffisantes;
- Un seul capteur est nécessaire, la solution pouvant de plus être intégrée à un radio altimètre.

La haute résolution suivant l'axe de déplacement du porteur est assurée par le traitement cohérent des signaux réfléchis par les objets sur une certaine durée d'analyse (analyse sur un certain nombre de pulses/rampes réfléchis). Les objets détectés sont positionnés finement en distance et suivant l'axe de déplacement du porteur.

**Revendications**

1. Procédé permettant de suivre la variation de la surface R du sol et/ou la présence d'éléments de sursol (2j), ledit procédé étant mis en oeuvre sur un porteur se déplaçant à la vitesse V= (Vx, Vy, Vz), ledit porteur (10) comprenant au moins une antenne d'émission/réception (12), un moyen de traitement des signaux (14), ledit procédé comprenant au moins les étapes suivantes:

   a) déterminer une forme d'onde h(t), constituée d'une suite de pulses ou train d'ondes,
   b) définir une plage de distance à surveiller,
   c) émettre ladite onde h(t) de type « chirp », rampes FMCW, ou signal pseudo aléatoire, de largeur de bande B, enregistrer les signaux réfléchis par le sol et reçus par le porteur,
   d) exécuter un traitement cohérent au sein de l'élément du train d'onde afin d'obtenir la résolution distance fixée initialement, le procédé effectue la mesure de la distance dj par un procédé de filtrage adapté en distance ou de deramping au sein de chaque pulse/rampe réfléchi, et
   e) pour un ensemble de N signaux réfléchis à N instants différents, pour une plage de distance et pour chaque angle de visée $\{\theta_c^i\}$, effectuer un traitement de l'ensemble des signaux reçus en appliquant la formule traduisant la fréquence Doppler des signaux réfléchis:

$$f_D(t) \approx \frac{2\left(v_x \cos \theta_c^i + v_z \sin \theta_c^i\right)}{\lambda} - \frac{2\left(v_x \sin \theta_c^i - v_z \cos \theta_c^i\right)^2}{\lambda D_0}t \ (1)$$

   où $D_0$ appartient à la plage de distance traitée,
   $\lambda$ est la longueur d'onde de l'onde émise,
   i est un indice pour un angle de visée,
   $\{\theta_c^i\}$ est une valeur donnée d'un angle de visée appartenant à l'ensemble des angles explorés par le faisceau, le procédé est **caractérisé en ce que**:

   f) on applique un critère de détection énergétique Ej en utilisant une valeur seuil choisie Es, de façon à déterminer des couples de valeurs dj, θj correspondant à la présence d'éléments de sursol ou de variation de niveau du sol,
   g) on détermine la valeur de la hauteur H sous le porteur,
   h) on estime les valeurs des hauteurs Hj des éléments de sursol (2j) en utilisant la hauteur sous aéronef H, les valeurs dj, θj par exemple au moyen d'un calcul trigonométrique,
   i) connaissant ces valeurs dj, θj, Hj on détermine les caractéristiques des éléments de sursol (2j), leur position pj et les variations Δr du niveau du sol ou sursol.

2. Procédé selon la revendication 1 **caractérisé en ce que** les signaux réfléchis et reçus par ledit porteur sont enregistrés après l'étape de traitement distance sur quelques pulses ou train d'onde ou au cours de l'étape c).

3. Procédé selon la revendication 1 **caractérisé en ce que** l'aéronef se déplace horizontalement avec une vitesse uniforme et en **en ce que** l'analyse spectrale des signaux reçus au cours du temps sur les N pulses est effectuée pour la fréquence Doppler $f_s^i$ :

$$f_s^i \approx f_0^i = \frac{2V}{\lambda} \cos \theta_C^i$$

**4.** Procédé selon la revendication 1 **caractérisé en ce que** pour une vitesse verticale non nulle de déplacement de l'aéronef, la fréquence Doppler d'intérêt est la fréquence Doppler $f_s^i$:

$$f_s^i \approx \frac{2\left(v_x \cos \theta_C^i + v_z \sin \theta_C^i\right)}{\lambda}$$

**5.** Procédé selon la revendication 1 **caractérisé en ce que** dans le cas d'un porteur ayant un mouvement quelconque, l'évolution de la fréquence Doppler dépend alors des variations de vitesse du porteur, et l'étape d'analyse spectrale est remplacée par la mise en oeuvre d'un filtre adapté tel que :

$$h(t) = s^*(-t)$$

où

$$s(t) = e^{-4j\frac{\pi}{\lambda}D(t)}, t \in \left[0, T_e\right]$$

avec $D(t)$ distance relief/aéronef au cours du temps et $T_e$ durée d'analyse.

**6.** Procédé selon l'une des revendications 1 à 5 **caractérisé en ce que** l'on détermine la hauteur H sous porteur en utilisant la fréquence Doppler nulle.

**7.** Procédé selon l'une des revendications 1 à 6 **caractérisé en ce qu'**il comporte une étape permettant de déterminer l'étendue ou la longueur L d'un élément de sursol selon l'axe de déplacement de l'aéronef comprenant au moins les étapes suivantes :

Conserver pour chaque valeur d'angle de visée, la valeur minimale de distance dj pour laquelle la valeur d'énergie Ej est au-dessus du seuil de détection Es, à partir des valeurs d'angles de visée voisines, déterminer la position pj du début de l'élément (2j) de sursol, puis la position pj+L de la fin dudit élément de sursol et déduire une longueur approximative de l'élément de sursol en mettant en oeuvre les étapes suivantes:

• Dans le cas où l'échantillonnage des angles de visée est fin, c'est à dire inférieur ou égal à la résolution angulaire, construction d'un profil de distance fonction de l'angle, puis, par calcul géométrique, construction d'un profil de hauteur fonction de l'angle;
• Dans le cas où l'échantillonnage des angles de visée est large, c'est à dire supérieur à la résolution angulaire, on procède à la détection d'éléments de sursol pour des angles de visée voisins de $\theta_C^i$, puis on estime la longueur de l'objet.

**8.** Procédé selon la revendication 1 de suivi au cours du temps de l'évolution de la distance aéronef/objet, et de déclenchement d'une alerte lorsque la distance devient inférieure à un seuil ds, ledit procédé comportant au moins les étapes suivantes :

Emission d'une forme d'onde de type chirp, FMCW ou pseudo-aléatoire. Enregistrement des signaux réfléchis par les objets et reçus par le porteur,
Pour un ensemble de N signaux réfléchis à N instants différents,
Pour chaque angle de visée $\theta_C^i$ et pour une plage de distance aéronef/relief ou aéronef/élément de sursol,

- Utiliser un filtrage adapté en distance dans chaque impulsion, afin d'optimiser le rapport signal/bruit,

- Effectuer un filtrage adapté Doppler d'impulsion à impulsion en met tant en oeuvre les étapes suivantes:

  o Calcul de la composante spectrale $f_s^i$ des signaux réfléchis,
  o Dans le cas de l'extension au porteur en mouvement non MRU, filtrage adapté,

- Détecter en utilisant une méthode de type énergétique, la présence éventuelle d'un élément de sursol sous l'angle de visée $\theta_c^i$ et à une distance $d^i$,
- Enregistrer la distance $d^i$ (t) correspondant à la distance minimale dmin pour laquelle il y a détection pour chaque valeur de $\theta_c^i$,
- Si $\theta_c^i$ correspond à l'angle de visée à la verticale, alors calculer la hauteur HO sous le porteur correspondant à la distance minimale pour laquelle il y a détection pour $\theta_c^i=\pi/2$.
- Sinon,

  ◦ Si $\theta_c^i$ correspond à l'angle minimal défini par l'ouverture de l'antenne:

    ▪ Pour t> $T_0$, comparaison de $d^i$ (t) à {$d^i$ ($t_{ant}$)}, $t_{ant}$<t,
    ▪ Si $d^i$ (t) < {$d^i$ ($t_{ant}$)}, $t_{ant}$<t et $d^i$ (t) < seuil, déclenchement d'une alerte.

9. Procédé selon la revendication 8, **caractérisée en ce que** le déclenchement d'une alerte dépend de la caractérisation de l'extension de l'objet de la manière suivante : pour des angles de visées $\theta_c^{iv}$ voisins de $\theta_c^i$, comparer des distances $d^{vi}$ et estimer de l'extension de l'objet suivant l'axe de déplacement du porteur.

10. Dispositif ou porteur se déplaçant à une vitesse V permettant de mettre en oeuvre le procédé de détection et de suivi de variation de relief du sol et/ou de détection d'obstacles selon l'une des revendications précédentes **caractérisé en ce qu'**il comporte au moins une antenne d'émission/réception (12), un moyen de traitement des signaux (14), un module de connaissance de la vitesse.

## Patentansprüche

1. Verfahren, das ermöglicht, die Veränderung der Oberfläche R des Bodens und/oder das Vorhandensein von Elementen auf dem Boden (2j) zu verfolgen, wobei das Verfahren auf einem Träger durchgeführt wird, der sich mit der Geschwindigkeit V = (Vx, Vy, Vz) bewegt, wobei der Träger (10) mindestens eine Sende-/Empfangsantenne (12), ein Mittel zur Verarbeitung der Signale (14) umfasst, wobei das Verfahren mindestens die folgenden Schritte umfasst:

   a) Bestimmen einer Wellenform h(t), die aus einer Folge von Impulsen oder des Wellenzugs besteht,
   b) Definieren eines Abstandsbereichs, der überwacht werden soll,
   c) Ausgeben der Welle h(t) vom Typ "chirp", FMCW-Rampen oder eines pseudozufallsbedingten Signals mit der Bandbreite B, Aufzeichnen der vom Boden reflektierten und vom Träger empfangenen Signale,
   d) Ausführen einer kohärenten Verarbeitung im Element des Wellenzugs, um die anfänglich festgesetzte Distanzauflösung zu erhalten, wobei das Verfahren die Messung der Distanz dj durch einen angepassten Filterprozess der Distanz oder des Deramping in jedem/jeder reflektierten Impuls/Rampe durchführt, und
   e) für eine Einheit von N reflektierten Signalen zu N verschiedenen Zeitpunkten, für einen Distanzbereich und für jeden Blickwinkel {$\theta c^i$}, Durchführen einer Verarbeitung der Einheit der empfangenen Signale durch Anwendung der Formel, die die Dopplerfrequenz der reflektierten Signale übersetzt:

$$f_D(t) \approx \frac{2\left(v_x \cos \theta_C^i + v_z \sin \theta_C^i\right)}{\lambda} - \frac{2\left(v_x \sin \theta_C^i - v_z \cos \theta_C^i\right)^2}{\lambda D_0} t \quad (1)$$

wobei $D_0$ Teil des behandelten Distanzbereichs ist,
$\lambda$ die Wellenlänge der ausgegebenen Welle ist,
i ein Index für einen Blickwinkel ist,
{$\theta c^i$} ein gegebener Wert eines Blickwinkels ist, der Teil der Einheit der durch das Bündel abgetasteten Winkel ist, wobei das Verfahren **dadurch gekennzeichnet ist, dass**

   f) ein Kriterium zum energetischen Nachweis Ej unter Verwendung eines gewählten Schwellenwerts ES angewendet wird, um Wertepaare dj, θj zu bestimmen, die der Anwesenheit von Elementen auf dem Boden oder der Veränderung des Bodenniveaus entsprechen,

g) der Wert der Höhe H unter dem Träger bestimmt wird,

h) die Werte der Höhen Hj der Elemente auf dem Boden (2j) unter Verwendung der Höhe unter dem Luftfahrzeug H, der Werte dj, θj zum Beispiel mit Hilfe einer trigonometrischen Berechnung abgeschätzt werden.

i) wenn diese Werte dj, θj, Hj bekannt sind, werden die Eigenschaften der Elemente auf dem Boden (2j), ihre Position pj und die Variationen Δr des Niveaus des Bodens oder über dem Boden bestimmt.

2. Verfahren nach Anspruch 1, **dadurch gekennzeichnet, dass** die reflektierten und vom Träger empfangenen Signale nach dem Schritt des Verarbeitens der Distanz auf einigen Impulsen oder dem Wellenzug oder im Laufe von Schritt c) registriert werden.

3. Verfahren nach Anspruch 1, **dadurch gekennzeichnet, dass** das Luftfahrzeug sich horizontal mit einer gleichförmigen Geschwindigkeit bewegt, und dadurch, dass die Spektralanalyse der Signale, erhalten im Laufe der Zeit auf den N Impulsen für die folgende Dopplerfrequenz $f_s^i$ durchgeführt wird:

$$f_s^i \approx f_0^i = \frac{2V}{\lambda}\cos\theta_C^i$$

4. Verfahren nach Anspruch 1, **dadurch gekennzeichnet, dass** für eine vertikale Geschwindigkeit von Interesse verschieden von null der Bewegung des Luftfahrzeugs die Dopplerfrequenz von Interesse die folgende Dopplerfrequenz $f_s i$ ist:

$$f_s^i \approx \frac{2\left(v_x \cos\theta_C^i + v_z \sin\theta_C^i\right)}{\lambda}$$

5. Verfahren nach Anspruch 1, **dadurch gekennzeichnet, dass** für den Fall, dass ein Träger irgendeine Bewegung aufweist, die Entwicklung der Dopplerfrequenz nun von Veränderungen der Geschwindigkeit des Trägers abhängt, und der Schritt der Spektralanalyse durch die Durchführung eines angepassten Filters ersetzt wird, wie z.B.

$$h(t) = s^*(-t),$$

wobei

$$s(t) = e^{-4j\frac{\pi}{\lambda}D(t)}, t \in [0, T_e]$$

wobei D(t) die Distanz Relief/Luftfahrzeug im Laufe der Zeit und $T_e$ die Dauer der Analyse ist.

6. Verfahren nach einem der Ansprüche 1 bis 5, **dadurch gekennzeichnet, dass** die Höhe H unter dem Träger unter Verwendung der Dopplerfrequenz null bestimmt wird.

7. Verfahren nach einem der Ansprüche 1 bis 6, **dadurch gekennzeichnet, dass** es einen Schritt umfasst, der ermöglicht, die Ausdehnung oder die Länge L eines Elements auf dem Boden gemäß der Bewegungsachse des Luftfahrzeugs zu bestimmen, umfassend mindestens die folgenden Schritte:

Beibehalten, für jeden Wert des Blickwinkels, des minimalen Distanzwerts dj, für den der Energiewert Ej unter der Nachweisschwelle Es liegt, auf der Grundlage der benachbarten Werte der Blickwinkel, Bestimmen der Position pj des Anfangs des Elements (2j) auf dem Boden, dann der Position pj+L des Endes des Elements auf dem Boden und Ableiten einer ungefähren Länge des Elements auf dem Boden durch die Ausführung der folgenden Schritte:

- Für den Fall, dass die Entnahme von Proben der Blickwinkel fein ist, d.h. unter oder gleich der Winkelauflösung, Aufbau eines Distanzprofils je nach dem Winkel, dann, durch geometrische Berechnung, Aufbau eines Höhenprofils je nach dem Winkel;
- Für den Fall, dass die Entnahme von Proben der Blickwinkel grob ist, d.h. größer als die Winkelauflösung, Nachweis von Elementen auf dem Boden für benachbarte Blickwinkel von $\theta_c^i$, dann Abschätzen der Länge des Gegenstands.

8. Verfahren nach Anspruch 1 zur Verfolgung im Laufe der Zeit der Entwicklung der Distanz Luftfahrzeug/Gegenstand, und der Auslösung eines Alarms, wenn die Distanz geringer als eine Schwelle ds wird, wobei das Verfahren mindestens die folgenden Schritte umfasst:

Ausgeben einer Wellenform vom Typ "Chirp", FMCW oder pseudozufallsbedingt. Aufzeichnen der von den Gegenständen reflektierten und vom Träger empfangenen Signale
für eine Einheit von N reflektierten Signalen zu N verschiedenen Zeitpunkten,
für jeden Blickwinkel $\theta_c^i$ und für einen Distanzbereich Luftfahrzeug/Relief oder Luftfahrzeug/Element auf dem Boden,

- Verwenden einer angepassten Filterung der Distanz in jedem Impuls, um die Beziehung Signal/Rauschen zu optimieren,
- Durchführen einer angepassten Dopplerfilterung von Impuls zu Impuls durch die Durchführung der folgenden Schritte:

o Berechnen der Spektralkomponente $f_s^i$ der reflektierten Signale,
o Für den Fall der Ausdehnung auf den Träger in Nicht-MRU-Bewegung, angepasste Filterung,

- Nachweis, unter Verwendung eines Verfahrens des energetischen Typs, der eventuellen Anwesenheit eines Elements auf dem Boden unter dem Blickwinkel $\theta_c^i$ und in einer Distanz $d^i$,
- Aufzeichnen der Distanz $d^i$ (t), die der minimalen Distanz $d_{min}$ entspricht, für die ein Nachweis für jeden Wert $\theta_c^i$ vorliegt,
- wenn $\theta_c^i$ dem Blickwinkel in der Vertikalen entspricht, dann Berechnung der Höhe $H_0$ unter dem Träger, die der minimalen Distanz entspricht, für die ein Nachweis für $\theta_c^i=\pi/2$ vorliegt.
- Andernfalls

• wenn $\theta_c^i$ dem minimalen Winkel entspricht, der von der Öffnung der Antenne definiert wird:

■ für t> $T_0$, Vergleich von $d^i$ (t) mit {$d^i$ ($t_{ant}$)}, $t_{ant}$<t
■ wenn $d^i$ (t) < {$d^i$ ($t_{ant}$)}, $t_{ant}$<t et $d^i$ (t) < Schwelle, Auslösung eines Alarms.

9. Verfahren nach Anspruch 8, **dadurch gekennzeichnet, dass** die Auslösung eines Alarms von der Charakterisierung der Ausdehnung des Gegenstands auf die folgende Weise abhängt: für Blickwinkel von $\theta_c^{vi}$, die $\theta_c^i$ benachbart sind, Vergleich der Distanzen $d^{vi}$ und Abschätzen der Ausdehnung des Gegenstands gemäß der Bewegungsachse des Trägers.

10. Vorrichtung oder Träger, die/der sich mit einer Geschwindigkeit V bewegt, die ermöglicht, das Verfahren zum Nachweis und zur Nachverfolgung der Veränderung des Reliefs des Bodens und/oder zum Nachweis von Hindernissen nach einem der vorhergehenden Ansprüche durchzuführen, **dadurch gekennzeichnet, dass** sie/er mindestens eine Sende-/Empfangsantenne (12) umfasst, ein Mittel zur Verarbeitung der Signale (14) ein Modul zur Erkennung der Geschwindigkeit.

**Claims**

1. A method suitable for tracking the variation in the surface R of the ground and/or the presence of above-ground elements (2j), said method being implemented on a carrier traveling at the speed V = (Vx, Vy, Vz), said carrier (10) comprising at least one transmission/reception antenna (12), a signal-processing means (14), said method comprising at least the following steps:

a) determination of a waveform h(t), made up of a succession of pulses or a wave train,

b) definition of a range of distance to be monitored,

c) transmission of said wave h(t) of "chirp" type, FMCW ramps, or a pseudo-random signal, of bandwidth B, recording of the signals reflected by the ground and received by the carrier,

d) execution of coherent processing within the element of the wave train in order to obtain the initially fixed distance resolution, the method measuring the distance dj by means of an adaptive distance filtering method or deramping within each reflected pulse/ramp, and

e) for a set of N signals reflected at N different instants, for a range of distance and for each angle of sight $\{\theta_c{}^i\}$, performance of processing for the set of signals received by applying the formula translating the Doppler frequency of the reflected signals:

$$f_D(t) \approx \frac{2\left(v_x \cos\theta_C{}^i + v_z \sin\theta_C{}^i\right)}{\lambda} - \frac{2\left(v_x \sin\theta_C{}^i - v_z \cos\theta_C{}^i\right)^2}{\lambda D_0}t \quad (1)$$

where $D_0$ belongs to the processed range of distance,

$\lambda$ is the wavelength of the transmitted wave,

i is an index for an angle of sight,

$\{\theta_c{}^i\}$ is a given value for an angle of sight belonging to the set of angles explored by the beam, said method being **characterized in that**:

f) application of an energy detection criterion Ej by using a chosen threshold value Es, in order to determine pairs of values dj, θj corresponding to the presence of above-ground elements or of variation of the level of the ground,

g) determination of the value of the altitude H below the carrier,

h) estimation of the values of the altitudes Hj of the above-ground elements (2j) by using the altitude below the aircraft H, the values dj, θj, for example using a trigonometric calculation,

i) in light of these values dj, θj, Hj, determination of the features of the above-ground elements (2j), the position pj thereof and the variations Δr in the level of the ground or above-ground.

2. The method as claimed in claim 1, **characterized in that** the signals reflected and received by said carrier are recorded after the distance processing step over a few pulses or wave trains or in the course of step c).

3. The method as claimed in claim 1, **characterized in that** the aircraft travels horizontally at a uniform speed and **in that** the spectral analysis of the signals received in the course of time over the N pulses is performed for the Doppler frequency $f_s i$:

$$f_s{}^i \approx f_0{}^i = \frac{2V}{\lambda}\cos\theta_C{}^i$$

4. The method as claimed in claim 1, **characterized in that** for a nonzero vertical speed of travel of the aircraft, the Doppler frequency of interest is the Doppler frequency $f_s{}^i$:

$$f_s{}^i \approx \frac{2\left(v_x \cos\theta_C{}^i + v_z \sin\theta_C{}^i\right)}{\lambda}$$

5. The method as claimed in claim 1, **characterized in that** in the case of a carrier having arbitrary movement, the change in the Doppler frequency is thus dependent on the variations in speed of the carrier, and the spectral analysis step is replaced by the implementation of an adaptive filter such that:

$$h(t) = s^*(-t) \, ,$$

where

$$s(t) = e^{-4j\frac{\pi}{\lambda}D(t)} , t \in \left[0, T_e\right]$$

with D(t) being the relief/aircraft distance in the course of time and $T_e$ being the analysis period.

6. The method as claimed in one of claims 1 to 5 **characterized in that** the altitude H below the carrier is determined by using the zero Doppler frequency.

7. The method as claimed in one of claims 1 to 6 **characterized in that** it has a step allowing determination of the extent or length L of an above-ground element along the axis of travel of the aircraft, comprising at least the following steps:

preservation, for each angle of sight value, of the minimum value of distance dj for which the energy value Ej is above the detection threshold Es, on the basis of the adjacent angle of sight values, determination of the position pj at the start of the above-ground element (2j), then the position pj+L of the end of said above-ground element and deduction of an approximate length of the above-ground element by implementing the following steps:

• in the event of the sampling of the angles of sight being fine, that is to say less than or equal to the angular resolution, construction of a distance profile on the basis of the angle, then, by means of geometric calculation, construction of an altitude profile on the basis of the angle;
• in the event of the sampling of the angles of sight being broad, that is to say greater than the angular resolution, above-ground elements are detected for angles of sight adjacent to $\theta_c^i$, then the length of the object is estimated.

8. The method as claimed in claim 1 for tracking the change in the aircraft/object distance in the course of time, and for triggering a warning when the distance becomes less than a threshold ds, said method having at least the following steps:

transmission of a waveform of chirp, FMCW or pseudo-random type, recording of the signals reflected by the objects and received by the carrier,
for a set of N signals reflected at N different instants,
for each angle of sight $\theta_c^i$ and for a range of aircraft/relief or aircraft/above-ground element distance,

- use of adaptive distance filtering in each pulse in order to optimize the signal-to-noise ratio,
- performance of adaptive Doppler filtering from pulse to pulse by implementing the following steps:

o calculation of the spectral component $f_s^i$ of the reflected signals,
o in the event of extension to the carrier in non-URM movement, use of adaptive filtering,

- use of an energy-type method to detect the possible presence of an above-ground element under the angle of sight $\theta_c^i$ and at a distance $d^i$,
- recording of the distance $d^i(t)$ corresponding to the minimum distance dmin for which there is detection for each value of $\theta_c^i$,
- if $\theta_c^i$ corresponds to the angle of sight at the vertical, then calculation of the altitude HO below the carrier corresponding to the minimum distance for which there is detection for $\theta_c^i = \pi/2$,
- otherwise,

○ if $\theta_c^i$ corresponds to the minimum angle defined by the aperture of the antenna:

▪ for t > $T_0$, comparison of $d^i(t)$ with $\{d^i(t_{ant})\}$, $t_{ant}$ < t,

• if $d^i(t) < \{d^i(t_{ant})\}$, $t_{ant} < t$ and $d^i(t) <$ threshold, triggering of a warning.

9. The method as claimed in claim 8, **characterized in that** the triggering of a warning is dependent on the characterization of the extension of the object as follows: for angles of sight $\theta_c^{vi}$ adjacent to $\theta_c^i$, comparison of the distances $d^{vi}$ and estimation of the extension of the object along the axis of travel of the carrier.

10. A device or carrier traveling at a speed V suitable for implementing the method for detecting and tracking variation in relief of the ground and/or for detecting obstacles as claimed in one of the preceding claims, **characterized in that** it has at least one transmission/reception antenna (12), a means for processing the signals (14), a speed awareness module.

FIG.1

FIG.2

FIG.3A

FIG.3B

FIG.4

FIG.5

FIG.6

FIG.7

θ: ouverture de l'antenne du radar en tangage
$\theta_d$: dépointage de l'antenne par rapport à la verticale

FIG.8

θ : ouverture de l'antenne en tangage

FIG.9

Instant $t_1$     Instant $t_2$     Instant $t_n$     $d_n$ < seuil
⇒ alerte

FIG.10

## RÉFÉRENCES CITÉES DANS LA DESCRIPTION

**Documents brevets cités dans la description**

- FR 2913775
- US 6885334 B
- US 5836957 A
- US 5736957 A